# FASCICULE DE BREVET EUROPEEN

(11) **EP 1 063 165 B1**
(45) Date de publication et mention de la délivrance du brevet: **18.08.2004**
(21) Numéro de dépôt: 00401738.0
(22) Date de dépôt: 19.06.2000
(51) Int. Cl.: B64B 1/00, B64D 5/00

(54) **Véhicule volant à haute altitude servant de relais hertzien et procédé pour la mise à poste de ce véhicule**
Hochfliegender Flugkörper zur Funkverbindung und Positionierverfahren
High-altitude airborne vehicle used as telecommunications system and method for positionning the vehicle

(30) Priorité: 21.06.1999 FR 9907812
(43) Date de publication de la demande: 27.12.2000
(73) Titulaire: ALCATEL, 75008 Paris (FR)
(72) Inventeur: Sainct, Hervé, 06110 Le Cannet (FR)
(74) Mandataire: Smith, Bradford Lee

(56) Documents cités:
- WO-A-95/04407
- WO-A-97/15992
- WO-A-97/33790
- GB-A- 2 082 995
- US-A- 4 697 761
- US-A- 4 995 572

## Description

La présente invention concerne un véhicule volant à haute altitude, ainsi qu'un procédé pour la mise à poste de ce véhicule et des applications.

Dans le cadre de la présente invention, on entend par haute altitude, une altitude qui est supérieure à la fois à l'altitude des liaisons aériennes civiles et à l'altitude du plafond nuageux de la terre. L'atmosphère située à une telle haute altitude est désignée ci-dessous haute atmosphère.

De nombreuses études et propositions, le plus souvent théoriques, ont été faites ces dernières années pour la conception et l'utilisation d'un véhicule, par exemple un avion, un ballon ou un parachute motorisé, destiné à aller, à partir du sol, dans la haute atmosphère, par exemple dans la stratosphère et à y rester à demeure, pour effectuer des traitements ou des opérations spécifiques. On citera à titre d'illustration les propositions décrites dans les documents WO-96 12643 et WO-95 32893.

De très nombreuses opérations sont envisageables, telles que l'observation terrestre, la télécommunication, la recherche scientifique, opérations qui sont réalisées usuellement par des satellites. Or, les satellites présentent un coût exorbitant et ils ne peuvent être installés qu'au profit d'utilisateurs importants, généralement étatiques ou multi-étatiques.

Les documents WO 97/15992, WO 95/04407, WO 97/33790 et GB-A-2 082 995 montrent un véhicule volant avec un relais hertzien d'un réseau de télécommunication.

En revanche, un véhicule volant à haute altitude pourrait être à la portée de collectivités territoriales réduites, telles que des communes ou des régions, ou de sociétés de moindre importance. En effet, un tel véhicule volant à haute altitude ne nécessite pas de fusée de lancement et, de plus, il peut employer dans l'atmosphère des composants non qualifiés de "spatiaux" à la différence des satellites. Ceci explique l'intérêt notamment économique d'un tel véhicule.

Toutefois, malgré cela, les solutions de véhicule à haute altitude envisagées et proposées ne sont pas économiquement ni même techniquement réalisables. En particulier :
- en raison de leur masse élevée et donc du rapport masse/puissance important, les véhicules proposés sont généralement trop lourds pour rester à demeure à haute altitude. En particulier, l'énergie fournie par des batteries et éventuellement par des capteurs solaires reste souvent insuffisante ;
- de plus, les capacités de stockage d'énergie proposées sont généralement insuffisantes pour permettre une alimentation nocturne ; et
- d'autres sources d'énergie, telles que la transmission d'énergie par micro-ondes à partir du sol, sont trop complexes et coûteuses et de plus agressives pour l'environnement.

L'invention concerne un procédé pour remplacer un relais d'un réseau de télécommunication.

Selon l'invention, ledit procédé est remarquable en ce que l'on remplace un relais hertzien par un véhicule volant muni d'un moyen d'émission et de réception d'ondes hertziennes, ledit véhicule volant étant amené à une altitude et dans une position telles que ledit moyen d'émission et de réception est situé dans la même direction que ledit relais remplacé, par rapport à au moins un utilisateur dudit réseau de télécommunication, le fonctionnement entre ledit moyen d'émission et de réception et ledit utilisateur étant réalisé par l'intermédiaire d'une interface existante. L'utilisateur n'a alors pas besoin de modifier, ni son interface, ni même le pointage de l'antenne. Le véhicule volant est remarquable en ce qu'il comporte uniquement des moyens de propulsion permettant audit véhicule de se maintenir, se déplacer et s'orienter à haute altitude.

Ainsi, comme grâce à l'invention, ledit véhicule ne comporte pas de moyens de propulsion généralement très lourds, encombrants et coûteux pour l'amener à poste à haute altitude dans la haute atmosphère, sa masse est très réduite, ainsi que son coût, ce qui permet de remédier aux inconvénients précités.

Donc, on peut remplacer des réseaux de relais hertziens basés au sol ou dans l'espace facilement et de plus sans modifier l'interface avec les terminaux utilisateurs, ce qui est particulièrement avantageux notamment en ce qui concerne le coût.

De plus, grâce à ses propres moyens de propulsion, ledit véhicule, par exemple un avion ou un planeur, peut réaliser les déplacements et orientations nécessaires à son fonctionnement et à son maintien à poste. Comme ces mouvements sont généralement très faibles, ledit véhicule ne nécessite pas beaucoup d'énergie pour les mettre en oeuvre, ce qui permet également de réduire le coût et d'alléger les contraintes énergétiques.

On notera de plus qu'en supprimant ainsi la contrainte de la phase de montée du véhicule, à pression et à température plus élevées, on permet d'optimiser ses caractéristiques spécifiquement pour son fonctionnement opérationnel à poste dans la haute atmosphère, et on peut en particulier choisir des solutions techniques qui ne permettraient pas d'effectuer une phase de montée à poste, en ce qui concerne par exemple l'aérodynamique, la température de fonctionnement, le stockage d'énergie, la résistance des structures, etc ...

A cet effet, la présente invention propose différentes caractéristiques techniques permettant notamment d'alléger les contraintes énergétiques et d'optimiser le fonctionnement du véhicule. On notera que l'ensemble de ces caractéristiques techniques précisées ci-dessous sont spécifiquement destinées au fonctionnement dans la haute atmosphère et ne sont pas utilisables notamment au sol ou en phase de montée à poste.

Dans un premier mode de réalisation particulièrement avantageux, ledit véhicule comporte au moins un propulseur à plasma qui utilise pour son fonctionnement du plasma créé par l'air environnant de la haute atmosphère. Grâce aux caractéristiques de la haute atmosphère, le plasma peut être créé sans matériau d'appoint, tel que du xénon, et sans un ensemble encombrant et lourd de réservoirs, de circuits et de vannes d'approvisionnement. Ainsi, ces moyens de propulsion sont très simples et peuvent fonctionner sans limitation de durée, puisqu'aucun épuisement de matériau d'appoint n'est à redouter.

Par ailleurs, de façon avantageuse, ledit véhicule comporte au moins un générateur solaire refroidi par convection au moyen de l'air environnant de ladite haute atmosphère.

Ainsi, ledit générateur solaire ou ses cellules solaires fonctionnent à une température beaucoup plus basse que la température ambiante au sol ou les températures de fonctionnement que l'on rencontre généralement dans l'espace avec les satellites artificiels, ce qui procure un bien meilleur rendement.

En outre, dans un mode de réalisation avantageux, ledit véhicule comporte au moins une batterie comportant des composants supraconducteurs. Grâce à un environnement convectif, dont la température est voisine de -100°C, on obtient un rendement bien meilleur que celui des batteries usuelles.

Selon un autre mode réalisation avantageux, ledit procédé est remarquable en ce que :
- au sol, ledit véhicule volant est rendu solidaire d'un engin de transport indépendant ;
- ledit engin de transport amène ledit véhicule volant, uniquement par l'intermédiaire de moyens de propulsion dudit engin de transport, à une haute altitude prévue pour son fonctionnement ;
- ledit engin de transport libère ledit véhicule volant à l'altitude et au moins à proximité de l'endroit de mise à poste prévu pour le fonctionnement ; et
- si nécessaire, ledit véhicule volant réalise sa mise à poste définitive et son orientation par ses propres moyens de propulsion.

De préférence, ledit engin de transport comporte au moins un ballon susceptible de monter à haute altitude. Un tel ballon, de type usuel, présente une capacité d'emport très élevée et peut donc amener sans problèmes, à coût réduit et avec une précision suffisante le véhicule à l'endroit souhaité. De plus, la nacelle de lancement de ce ballon peut être récupérée et réutilisée. En outre, la montée du ballon est suffisamment lente pour ne pas imposer des contraintes aérodynamiques et/ou mécaniques au véhicule volant (contrairement à un avion ou une fusée d'appoint par exemple).

Les figures du dessin annexé feront bien comprendre comment l'invention peut être réalisée. Sur ces figures, des références identiques désignent des éléments semblables.

La figure 1 montre les différentes étapes d'une mise à poste d'un véhicule conforme à l'invention.

La figure 2 illustre une application préférée d'un véhicule conforme à l'invention.

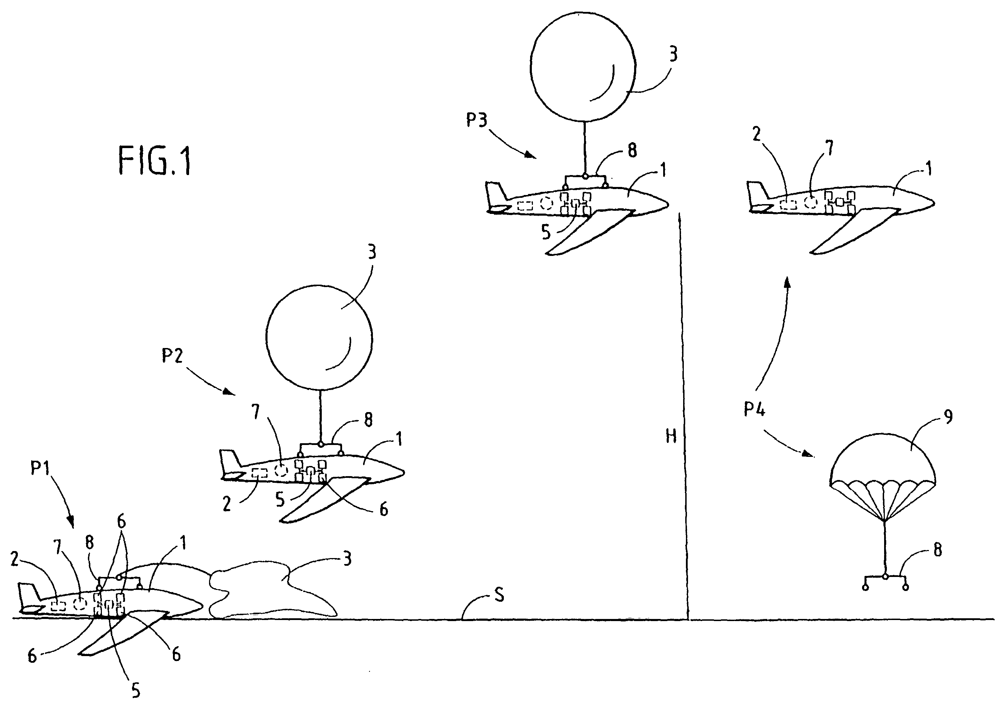

Le véhicule conforme à l'invention est mis à poste en mettant en oeuvre quatre phases successives P1 à P4 illustrées sur la figure 1 de gauche à droite, au moyen d'un engin de transport spécifique, en l'occurrence un ballon 3 de type usuel. Le véhicule 1 est mis à poste dans la haute atmosphère, notamment la stratosphère, à une hauteur H du sol S.

Selon l'invention, ledit véhicule 1, par exemple un aéronef, comporte uniquement des moyens de propulsion 2 lui permettant de se maintenir, de se déplacer et de s'orienter dans ladite haute atmosphère. Ces moyens de propulsion peuvent comporter par exemple un propulseur à plasma 2 qui utilise, pour son fonctionnement, du plasma créé par l'air environnant de ladite haute atmosphère. Lesdits moyens de propulsion peuvent également être du type à hélices.

Grâce aux faibles pressions existant dans la stratosphère ou la haute atmosphère, ledit plasma peut être créé sans utiliser un matériau d'appoint, tel que du xénon, et sans avoir à monter sur ledit véhicule 1 un ensemble de réservoirs, de circuits et de vannes d'approvisionnement, encombrant, lourd et coûteux. Un tel propulseur 2 est suffisant pour engendrer l'énergie nécessaire au déplacement et à l'orientation du véhicule 1 dans les applications envisagées et précisées ci-dessous. De plus, grâce aux caractéristiques précitées, ce propulseur 2 est d'une grande simplicité et peut fonctionner sans limitation de durée, puisqu'il ne nécessite aucun matériau d'appoint pour la création du plasma.

Le véhicule 1 conforme à l'invention comprend en outre par exemple un générateur solaire 5 qui est muni de cellules solaires 6 et qui est refroidi par convection avec l'air environnant existant dans la stratosphère et présentant généralement une température de l'ordre de -100°C. Grâce à une telle température, on obtient un rendement amélioré dudit générateur solaire 5.

De plus, selon l'invention, on ajuste les caractéristiques thermiques des matériaux supportant ou avoisinant les cellules solaires 6 de manière à choisir la température de fonctionnement la plus efficace. Ce générateur solaire 5, qui utilise un refroidissement convectif, à la différence des générateurs existant au sol ou dans l'espace, est donc adapté à l'environnement spécifique existant dans la stratosphère ou la haute atmosphère.

On notera de plus que :
- l'architecture de connexion des cellules solaires 6 (montage en série, en parallèle, etc ...) est choisie en fonction des rendements souhaités ; et
- l'agencement de ces cellules solaires 6 sur la surface externe du véhicule 1 est choisie en fonction de l'orientation envisagée du véhicule 1.

Par ailleurs, ledit véhicule 1 comporte au moins une batterie 7 constituée par exemple de composants supraconducteurs particulièrement bien adaptés aux conditions de température rencontrées dans la haute atmosphère. On notera qu'à l'altitude de fonctionnement H envisagée, dans un environnement convectif dont la température est voisine de -100°C, le maintien de la température de fonctionnement de, par exemple, un tore en matériau supraconducteur se traduit par une machine cryogénique mono-étage simple et à faible consommation.

Ainsi, grâce aux éléments 2, 5 et 7 précités, qui sont particulièrement bien adaptés aux conditions de fonctionnement à haute altitude, on allège considérablement les contraintes énergétiques existantes, de sorte que le véhicule 1 peut rester à demeure dans la haute atmosphère et fonctionner sur une longue durée à l'aide uniquement des moyens embarqués.

Comme indiqué précédemment, la conception simplifiée des moyens de propulsion 2 du véhicule 1 est notamment due à l'utilisation d'un engin de transport 3 spécifique, par exemple un ballon ou une fusée, pour la mise à poste dudit véhicule 1. Comme ledit véhicule 1 ne doit pas être conçu pour voler du sol à la hauteur H, il peut être aérodynamiquement optimisé pour son altitude de fonctionnement H envisagée.

Selon l'invention, ladite mise à poste comporte :
- une phase P1, pour laquelle le véhicule 1 est fixé au sol S à une nacelle 8 dudit ballon 3, par exemple de type stratosphérique ;
- une phase P2, pour laquelle on gonfle ledit ballon 3 qui soulève le véhicule 1 dans l'atmosphère ;
- une phase P3, pour laquelle ledit ballon 3 libère le véhicule 1 à la hauteur H souhaitée ; et
- une phase P4, dans laquelle le véhicule 1 réalise si nécessaire sa mise à poste définitive et son orientation, par l'intermédiaire uniquement desdits moyens de propulsion 2, et la nacelle 8 du ballon retombe, par l'intermédiaire d'un parachute 9, au sol S où elle peut être récupérée.

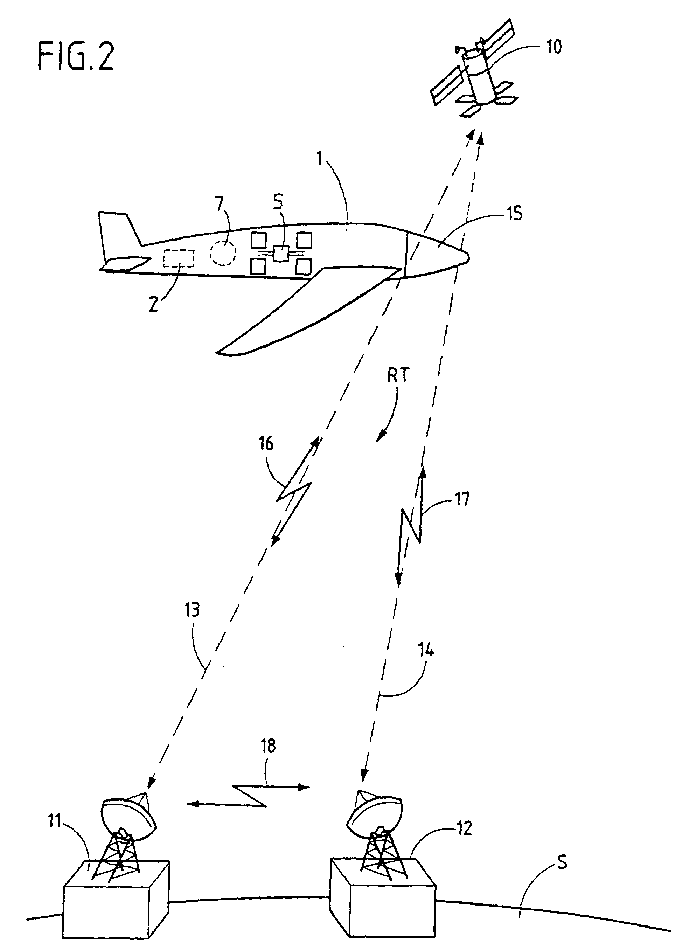

Le véhicule 1 conforme à l'invention peut être utilisée dans de nombreuses applications. En particulier, il peut être utilisé, tel que représenté sur la figure 2, pour remplacer un relais hertzien 10, en l'occurrence un relais satellitaire, d'un réseau de télécommunication RT comportant une pluralité de relais hertziens basés dans l'espace et/ou au sol.

Comme on peut le voir sur la figure 2, ledit relais satellitaire 10 peut communiquer avec des utilisateurs 1 1 et 12 dudit réseau de télécommunication RT, par exemple des récepteurs de radiocommunication ou de télévision ou des téléphones portables, respectivement par l'intermédiaire de liaisons hertziennes 13 et 14 représentées en traits interrompus.

Selon l'invention, pour remplacer ledit relais satellitaire 10, on amène le véhicule 1 qui est muni d'un moyen 15 d'émission et de réception d'ondes hertziennes à une altitude et dans une position telles qu'il est situé dans la même direction que ledit relais satellitaire 10 à remplacer, par rapport auxdits utilisateurs 11 et 12, ce qui permet de ne pas avoir à modifier l'orientation des antennes de ces derniers. Lorsque ledit remplacement est réalisé, ledit moyen 15 d'émission et de réception d'ondes hertziennes peut communiquer avec les utilisateurs 1 et 12 de façon usuelle, sans changer les interfaces de ces utilisateurs 11 et 12, comme illustré respectivement par des liaisons hertziennes 16 et 17, lesdits utilisateurs 11 et 12 pouvant communiquer entre eux, comme montré par une liaison hertzienne 18.

Bien entendu, au lieu de communiquer directement avec des utilisateurs terminaux, ledit moyen 15 peut également communiquer avec d'autres relais non représentés du réseau de télécommunication RT. Toutefois, quel que soit le mode de mise en oeuvre, selon l'invention, on maintient la même interface (fréquence, protocole, puissance, ...) avec les utilisateurs terminaux existants.

On notera qu'au lieu de remplacer un relais satellitaire 10, le véhicule 1 muni du moyen 15 peut bien entendu également remplacer, dans le cadre de la présente invention, un relais situé au sol.

De plus, la proximité du véhicule 1 par rapport à un utilisateur (quelques dizaines de kilomètres) permet également d'émettre facilement, avec une puissance isotrope équivalente rayonnée, qui est identique à celle d'un relais remplacé.

On notera que l'énergie nécessaire pour obtenir une telle puissance est beaucoup plus faible, par exemple, que celle nécessaire pour obtenir la même puissance à partir d'un satellite géostationnaire ou en orbite basse.

Un tel véhicule 1 permet ainsi de cumuler les avantages des réseaux sol envers les régions qui en sont déjà équipées (richesse, adaptation, flexibilité, ...) et ceux des satellites envers les régions non équipées (déploiement instantané sans infrastructure au sol).

Selon l'invention, ledit véhicule 1 muni desdits moyens 15 d'émission et de réception d'ondes hertziennes peut également être utilisé pour étendre un réseau de télécommunication préexistant non représenté ou pour permettre de créer entièrement ou partiellement un nouveau réseau de télécommunication à partir d'une pluralité de tels véhicules 1.

## Revendications

1. Procédé de remplacement d'un relais hertzien d'un réseau de télécommunication comportant une pluralité de relais hertziens, où l'on remplace ledit relais hertzien (10) par un véhicule volant (1), de type avion ou planeur, comportant des moyens de propulsion (2) permettant audit véhicule (1) de se maintenir, se déplacer et s'orienter uniquement à haute altitude et muni d'un moyen (15) d'émission et de réception d'ondes hertziennes (16, 17), ledit véhicule volant (1) étant amené à une altitude et dans une position telles que ledit moyen (15) d'émission et de réception est situé dans la même direction que ledit relais remplacé (10) par rapport à au moins un utilisateur (11, 12) dudit réseau de télécommunication (RT), le fonctionnement entre ledit moyen (15) d'émission et de réception et ledit utilisateur (11, 12) étant réalisé par l'intermédiaire d'une interface existante.

2. Procédé selon la revendication 1,
**caractérisé en ce que** lesdits moyens de propulsion (2) comportent au moins un propulseur à plasma qui utilise pour son fonctionnement du plasma créé par l'air environnant à ladite haute altitude.

3. Procédé selon l'une des revendications 1 et 2,
**caractérisé en ce que** ledit véhicule volant comporte au moins un générateur solaire (5) refroidi par convection au moyen de l'air environnant à ladite haute altitude.

4. Procédé selon l'une quelconque des revendications 1 à 3,
**caractérisé en ce que** ledit véhicule volant comporte au moins une batterie (7) comportant des composants supraconducteurs.

5. Procédé selon l'une quelconque des revendications 1 à 4,
**caractérisé en ce que** la mise à poste dudit véhicule volant est **caractérisée par** les éta pes suivantes :
- au sol, ledit véhicule volant (1 ) est rendu solidaire d'un engin de transport (3) indépendant ;
- ledit engin de transport (3) amène ledit véhicule volant (1), uniquement par l'intermédiaire de moyens de propulsion dudit engin de transport (3), à une haute altitude prévue pour son fonctionnement ;
- ledit engin de transport (3) libère ledit véhicule volant (1 ) à l'altitude (H) et au moins à proximité de l'endroit de mise à poste prévu pour le fonctionnement ; et
- si nécessaire, ledit véhicule volant (1) réalise sa mise à poste définitive et son orientation par ses propres moyens de propulsion (2).

6. Procédé selon la revendication 5,
**caractérisé en ce que** ledit engin de transport (3) comporte au moins un ballon (3) susceptible de monter à haute altitude.

## Claims

1. A method of replacing a radio relay in a telecommunications network comprising a plurality of radio relays, in which method said radio relay (10) is replaced by an aircraft (1) of the airplane or glider type, including propulsion means (2) enabling said aircraft (1) to maintain itself, to move itself, and to orient itself solely at high altitude, and provided with transceiver means (15) for radio waves (16, 17), said aircraft (1) being taken to an altitude and a position such that said transceiver means (15) lies in the same direction relative to at least one user (11, 12) of said telecommunications network (RT) as said replaced relay (10), with operation between said transceiver means (15) and said user (11, 12) being performed via an existing interface.

2. A method according to claim 1, **characterized in that** said propulsion means (2) comprise at least one plasma thruster which operates using plasma created from the surrounding air at said high altitude.

3. A method according to claim 1 or claim 2, **characterized in that** said aircraft includes at least one solar generator (5) cooled by convection with the surrounding air at said high altitude.

4. A method according to any one of claims 1 to 3, **characterized in that** said aircraft includes at least one storage battery (7) having superconductive components.

5. A method according to any one of claims 1 to 4, **characterized in that** getting said aircraft onto station is **characterized by** the following steps:
- on the ground, said aircraft (1) is secured to an independent transporter (3);
- said transporter (3) takes said aircraft (1) to a high altitude at which it is to operate making use solely of propulsion means of said transporter (3);
- said transporter (3) releases said aircraft (1) at the altitude (H) and at least approximately at the intended location of its operating station; and
- if necessary, said aircraft (1) uses its own propulsion means (2) to put itself finally on station and take up its proper orientation.

6. A method according to claim 5, **characterized in that** said transporter (3) comprises at least one balloon (3) suitable for rising to high altitude.

## Patentansprüche

1. Verfahren zum Ersetzen einer Relaisfunkstelle eines Telekommunikationsnetzes, beinhaltend mehrere Relaisfunkstellen, wobei die besagte Relaisfunkstelle (10) durch einen Flugkörper (1) wie zum Beispiel ein Flugzeug oder Segelflugzeug ersetzt wird, welcher Antriebsvorrichtungen (2) beinhaltet, die es dem besagten Flugkörper (1) ermöglichen, sich lediglich in großer Höhe zu halten, zu verlagern und auszurichten, und mit einer Vorrichtung (15) zum Senden und Empfangen von Funkwellen (16, 17) ausgerüstet ist, wobei der besagte Flugkörper (1) auf eine Höhe und in eine Position gebracht wird, die so gewählt sind, daß die besagte Vorrichtung (15) zum Senden und Empfangen gegenüber mindestens einem Benutzer (11, 12) des besagten Telekommunikationsnetzes (RT) in derselben Richtung angeordnet ist wie die besagte ersetzte Relaisfunkstelle (10), und wobei die Kommunikation zwischen der besagten Sende- und Empfangsvorrichtung (15) und dem besagten Benutzer (11, 12) über eine vorhandene Schnittstelle bewerkstelligt wird.

2. Verfahren gemäß Anspruch 1,
**dadurch gekennzeichnet, daß** die besagten Antriebsvorrichtungen (2) mindestens ein Plasmatriebwerk beinhalten, welches für seinen Betrieb Plasma verwendet, das durch die Umgebungsluft in der besagten großen Höhe gebildet wird.

3. Verfahren gemäß einem oder beiden der Ansprüche 1 und 2,
**dadurch gekennzeichnet, daß** der besagte Flugkörper mindestens einen Solargenerator (5) beinhaltet, der durch die Konvektion der in der besagten großen Höhe vorhandenen Umgebungsluft gekühlt wird.

4. Verfahren gemäß einem oder mehreren der Ansprüche 1 bis 3,
**dadurch gekennzeichnet, daß** der besagte Flugkörper mindestens eine Batterie (7) mit supraleitenden Bauelementen beinhaltet.

5. Verfahren gemäß einem oder mehreren der Ansprüche 1 bis 4,
**dadurch gekennzeichnet, daß** die Positionierung des besagten Flugkörpers durch folgende Phasen gekennzeichnet ist:
- Am Boden wird der besagte Flugkörper kraftschlüssig mit einem unabhängigen Transportgerät (3) verbunden;
- das besagte Transportgerät (3) befördert den besagten Flugkörper (1) ausschließlich mittels Antriebsvorrichtungen des besagten Transportgeräts (3) in eine für seinen Betrieb vorgesehene große Höhe;
- das besagte Transportgerät (3) gibt den besagten Flugkörper (1) in der Höhe (H) und zumindest in der Nähe der für den Betrieb vorgesehenen Position frei, und
- der besagte Flugkörper (1) bewerkstelligt, falls notwendig, seine endgültige Positionierung und Ausrichtung mit seinen eigenen Antriebsvorrichtungen (2).

6. Verfahren gemäß Anspruch 5,
**dadurch gekennzeichnet, daß** das besagte Transportgerät (3) mindestens einen Ballon (3) beinhaltet, der in große Höhen aufsteigen kann.
